# EUROPEAN PATENT SPECIFICATION

(11) **EP 2 877 339 B1**
(45) Date of publication and mention of the grant of the patent: **08.06.2016**
(21) Application number: 13773349.9
(22) Date of filing: 15.07.2013
(51) Int. Cl.: B29D 30/00

(54) **METHOD AND APPARATUS FOR MANAGEMENT CONTROL OF ANNULAR ANCHORING STRUCTURES IN A PROCESS FOR BUILDING TYRES FOR VEHICLE WHEELS**
VERFAHREN UND VORRICHTUNG ZUR MANAGEMENTKONTROLLE VON RINGFÖRMIGEN REIFENWULSTAUFBAUTEN IN EINEM VERFAHREN ZUM AUFBAUEN VON REIFEN FÜR FAHRZEUGRÄDER
PROCEDE ET APPAREIL DE CONTRÔLE DE GESTION DES STRUCTURES DE BOURRELET ANNULAIR DANS UN PROCÉDÉ DE FABRICATION DE PNEUS POUR ROUES DE VÉHICULES

(30) Priority: 24.07.2012 IT MI20121282; 31.07.2012 US 201261677769 P
(43) Date of publication of application: 03.06.2015
(73) Proprietor: Pirelli Tyre S.p.A., 20126 Milano (IT)
(72) Inventor: MARCHINI, Maurizio, I-20126 Milano (IT); MERVIC, Stefano, I-20126 Milano (IT)
(74) Representative: Vittorangeli, Lucia
(86) International application number: PCT/IB2013/055824
(87) International publication number: WO 2014/016731

(56) References cited:
- EP-A1- 1 724 100
- DE-A1-102006 051 540
- US-A- 4 553 894
- US-A1- 2009 314 436

## Description

The present invention relates to a method and an apparatus for management control of annular anchoring structures in a process for building tyres for vehicle wheels.

A tyre for vehicle wheels generally comprises a carcass structure comprising at least one carcass ply having respectively opposite end flaps engaged with respective annular anchoring structures integrated in the zones usually identified with the name "beads", having an internal diameter substantially corresponding to a so-called "fitting diameter" of the tyre on a respective rim.

By "annular anchoring structure" it is intended a component of the tyre which comprises a bead core. Preferably such component comprises a bead core and a filler insert. Still more preferably such component comprises a bead core and a filler insert, both enclosed by one edge.

By "type" of annular anchoring structure, it is intended the set of the geometric characteristics (e.g.: fitting measure of the bead core, type of section of the bead core and the size thereof, size of the possible filler insert, positioning and size of the edge, internal and external circumferential length of the bead core and the annular anchoring structure in its entirety) and technologies (e.g.: material and thread/cord characteristics of the bead core, elastomeric material associated with said threads/cords of the bead core, elastomeric material of the possible filler insert, elastomeric material of the possible edge, characteristics of the possible cords present in the edge) thereof.

With the term "carousel", it is intended a mechanism adapted to support a plurality of baskets containing annular anchoring structures.

Preferably the aforesaid mechanism makes said plurality of baskets move along a closed path.

Preferably the aforesaid mechanism makes said plurality of baskets move along a substantially circular path.

With the term "battery", it is intended a series of carousels disposed next to each other in a manner so as to be able to simultaneously dispose a plurality of baskets in a work region.

With the term "rows" of the battery it is intended the lines of carousels mutually aligned and side-by-side to form the battery. A battery can be formed by one or more rows of carousels. An apparatus and method for management control of annular anchoring structures and a process for building tires for vehicle wheels are known for example from EP1724100, US4553894, DE102006051540 or US2009314436.

Known today are plants with high flexibility for the production of tyres for vehicle wheels, i.e. capable of building a plurality of tyre types during a single production cycle.

For example, the document WO 2012 063153 on behalf of the same Applicant allows simultaneously managing different types of annular anchoring structures intended for tyres of different models. Such document illustrates a plant for building tyres for vehicle wheels comprising a device for building carcass sleeves on building drums and a machine for forming the beads. The plant is also provided with a first storage zone and a second storage zone for the annular anchoring structures. A first transport device is movable between a position for picking up pairs of annular anchoring structures from the first storage zone and a position for releasing said pairs of annular anchoring structures to the bead formation machine. A second transport device is movable between a first engagement position in the first storage zone and a second engagement position in the second storage zone, in order to move a plurality of annular anchoring structures between the first storage zone and the second storage zone and vice versa.

The Applicant has observed that, in the plants of known type like that just described, the apparatuses that contain (baskets in the storage zones) and move (transport devices) the annular anchoring structures occupy wide spaces around the machines set for building the tyres, since said apparatuses must receive not only all of the anchorage structures of the current production cycle but also those for the next production cycle in a manner such that the dead times of the plant, necessary for feeding components, are limited.

The Applicant has recognized the need to achieve a compact storage area in which it is possible to load, during a production cycle and substantially without time constraints, the annular anchoring structures which will be employed in the subsequent production cycle.

The Applicant has also understood that said annular structures in the different types can be loaded into respective baskets at rest, while other baskets are in operative phase, i.e. while the annular anchoring structures for the tyre models being produced continue to be picked up from such baskets.

The Applicant has therefore perceived the need to develop a method, a process and an apparatus which allow ensuring the correct and reliable daily and/or weekly production of tyres in plants with high flexibility, at the same time limiting the spaces necessary for the management (loading, transportation, pick up etc.) of the annular anchoring structures and hence of the plant in its entirety.

The Applicant has therefore found that, by obtaining an apparatus comprising a plurality of carousels, each carrying multiple baskets adapted to receive the annular anchoring structures; such carousels are movable in a manner such to have a first series of baskets in a work region and simultaneously to have a second series of baskets in a loading region, it is possible to feed the annular anchoring structures to a building drum associated with a tyre building station in an extremely flexible manner, at the same time reducing the plant dead times.

The present invention hence refers, according to a first aspect, to a method for management control of annular anchoring structures in a process for building tyres for vehicle wheels, comprising:
i) arranging at least one first series of baskets in front of a processing station provided for receiving annular anchoring structures during processing of a tyre being formed;
ii) arranging at least one second series of baskets placed at the rear of the first series of baskets relative to the processing station;
iii) picking up at least one annular anchoring structure from at least one first basket of the first series and transferring it to the processing station while at least one second basket of the second series is loaded with at least one annular anchoring structure;
iv) simultaneously exchanging the position of said at least one first basket with that of said at least one second basket;
v) repeating actions iii) and iv).

In accordance with a second aspect, the invention regards an apparatus for management control of annular anchoring structures in a processing station for building tyres for vehicle wheels, comprising:
a battery of carousels disposed close to each other, each of said carousels carrying at least two baskets, each adapted to receive a plurality of annular anchoring structures;
a handling device to pick up the annular anchoring structures from the baskets and releasing said annular anchoring structures at the processing station;
wherein, through a rotation of the respective carousel, each basket is movable between a work region, placed in front of the handling device, and a loading region facing away from the handling device.

According to a different aspect, the present invention relates to a process for building tyres for vehicle wheels comprising:
arranging a battery of carousels close to each other, each of said carousels carrying at least two baskets adapted to receive a plurality of annular anchoring structures;
arranging at least one building drum associated with a processing station, such drum is provided for receiving pairs of annular anchoring structures during processing of a tyre being formed;
wherein feeding of the annular anchoring structures to said processing station comprises:
   loading the annular anchoring structures into the baskets disposed in a loading region facing away from the processing station;
   rotating the carousels carrying the loaded baskets until arranging them in a work region facing the processing station;
   picking up, by a handling device, the annular anchoring structures from the baskets disposed in the work region and releasing said annular anchoring structures at the processing station.

The Applicant deems that the use of the carousels allows making the storage constituted by the baskets dynamic, and always allows offering the necessary accessibility for the loading of the empty baskets, placed in the loading region, simultaneously with picking-up by the handler of anchoring structures from the full baskets, disposed in the work region. Finally, there are substantially no time constraints for the loading of the baskets, which can be carried out at any moment both in a continuous manner (one basket after the other) and in a spot manner (one basket at a time without continuity). The Applicant also deems that the method, apparatus and process as illustrated allow a continuous production, i.e. without stops of the plant due to the need to load the storage with the annular anchoring structures. In addition, the aforesaid apparatus is very compact, such to limit the bulkiness of the plant in its entirety.

The present invention, in at least one of the aforesaid aspects, can have one or more of the preferred characteristics which are described hereinbelow.

Preferably, each carousel is movable between a first position in which it is disposed between two adjacent carousels and a second position in which it is extracted from the battery and can rotate without interfering with the other carousels.

This solution ensures the rotation of each carousel, in a manner so as to move the baskets between the work region and the loading region, in any case limiting the bulkiness of the battery in its entirety. When the carousels are in the respective rows, they are arranged at a short distance from each other and they cannot rotate because they would interfere with the adjacent carousels. By extracting the carousel from the row to which it belongs, it is possible to make it rotate without interference.

In one embodiment, the battery comprises two rows of carousels; a manoeuvring space being defined between said two rows, such space adapted to receive each carousel.

The two rows of carousels that constitute the battery are mutually spaced by a distance sufficient to define a space adapted to receive one of the carousels, extracted from the respective row, and to allow the rotation thereof without interference with other parts of the apparatus. Preferably, the manoeuvring space can be simultaneously occupied by multiple carousels only if they are not adjacent.

Preferably, the carousels of the two rows are combined in pairs.

The two rows are extended parallel to each other and consequently each carousel of one row lies side-by-side at a distance (equal to the manoeuvring space) from a carousel of the other row.

Preferably, the distance between the two rows is substantially the same as the bulkiness of one of the carousels.

The abovementioned distance allows moving the carousels of each pair in the manoeuvring space only one at a time, while the other remains in the respective row. This allows increasing the compactness of the apparatus while ensuring a sufficient freedom of movement and flexibility of the apparatus.

Preferably, the rows are disposed horizontally.

In other words, the battery is formed by two superimposed rows of carousels and is mainly horizontally extended. This allows moving the handling device along a horizontal path parallel to the battery, to pick up the annular anchoring structures from the baskets which are opposite each other in the work region. Each carousel belonging to the upper row is lowered in order to bring it into the manoeuvring space while each carousel belonging to the lower row is lifted in order to bring it into the manoeuvring space.

In a preferred embodiment, each carousel can rotate around a vertical axis.

This solution allows limiting the vertical distance between the two horizontal rows, since, during the rotation of a carousel disposed in the manoeuvring space, the vertical bulkiness thereof remains unchanged. It is however necessary that there is space on the sides, i.e. that the adjacent carousels both remain in the respective rows.

Preferably, when a carousel is in the manoeuvring space, its baskets are found at an ergonomic height for manual loading of the annular anchoring structures.

The operator who accesses the baskets placed in the loading region and belonging to a carousel placed in the manoeuvring space can easily manually position the annular structures into the baskets themselves without the aid of ladders and without having to bend himself. Preferably, each carousel comprises a rotatable support susceptible of rotation around a vertical shaft.

Each shaft is fixed and the support, which carries said at least two baskets, is made to rotate around the shaft by means of a motor.

In a preferred embodiment, each vertical shaft carries a lower carousel and an upper carousel.

The carousels lie, two-by-two, on top of each other and aligned along a vertical direction. This allows using a single shaft, simplifying the structure of the apparatus and further limiting the bulkiness thereof. The two carousels of each pair mounted on the same shaft rotate around the latter, preferably independently from each other, preferably through dedicated motors.

Preferably, the rotatable support can translate along the vertical shaft.

The two carousels of each vertically-aligned pair are vertically translated along the same shaft, preferably independently from each other, preferably through dedicated actuators, in order to move the carousels into the manoeuvring space.

Preferably, the rotatable support carries two baskets placed at diametrically opposite positions relative to the vertical shaft.

Each of the two baskets of a single carousel is extended starting from one end close to the shaft towards a radially peripheral end of the carousel itself.

Preferably, the annular anchoring structures of each basket are disposed in a mutual side-by-side relationship and coaxial with a common main axis.

In each basket, the annular anchoring structures are disposed one next to the other and are coaxial.

Preferably, each basket has a single picking-up region of the annular anchoring structures.

The handling device can therefore be programmed to pick up the annular anchoring structures by grasping them at the pick-up zones whose position in the work region of the apparatus is well defined.

Preferably, said single picking-up region is placed at a final end of the respective basket.

The pick up from the final end is simple to execute, since the annular anchoring structure disposed herein is more easily accessible than the others.

Preferably, said single picking-up region is unchangeable on varying the features of the annular anchoring structures.

The relative position of the picking-up region on the respective basket is always the same, i.e. it does not change even by changing the type of the annular anchoring structures contained therein.

In one embodiment, each basket comprises devices for moving the annular anchoring structures along the main axis and towards the picking-up region.

Each annular anchoring structure is carried into the correct position in order to be picked up by the handling device that grasps it in the picking-up region.

According to a preferred embodiment, each carousel comprises a rotatable support susceptible of rotation around a vertical shaft; wherein the rotatable support carries two baskets placed at diametrically opposite positions relative to the vertical shaft; wherein the main axes of the baskets extend from the vertical shaft along radial directions.

Preferably, the radial directions of the two baskets of a single carousel coincide, i.e. the baskets are angularly spaced by 180°, and therefore a rotation of the same angle reverses the positions thereof.

Preferably, each basket has a single picking-up region of the annular anchoring structures disposed on a radially external end of the carousel.

It follows that the handling device picks up the annular anchoring structures at a defined and relatively limited number of pick-up zones (e.g. several dozen) placed on the ends of the baskets positioned in the work region.

Preferably, each basket is at least partly extractable from the respective rotatable support along a radial direction.

Each basket can be extracted radially moving away from the shaft, preferably due to a slide, in order to facilitate the loading operations of the annular anchoring structures.

In a preferred embodiment, each vertical shaft carries a lower carousel and an upper carousel and the baskets of the lower carousel have a radial extension greater than the radial extension of the baskets of the upper carousel.

The baskets disposed in the work region and belonging to the lower row project with respect to those of the upper row, even when the baskets in the lower row or those in the upper row lie in the manoeuvring space. This feature allows the handling device, which approaches the baskets from above in order to pick them up, to not be obstructed by the baskets of the upper row when it comes to grasp the annular anchoring structures supported by the baskets of the lower row.

Preferably, the support of each carousel comprises a sleeve slidably mounted on the shaft. The sleeve cannot rotate around the shaft, preferably due to a grooved coupling. A rotatable support is rotatably installed on the sleeve, preferably coupled through bearings; such rotatable support has two portions which are extended in radially opposite directions. On each of the abovementioned portions, a slide is positioned which carries a basket. Between the shaft (or a base integral therewith) and the sleeve, an actuator is operatively disposed, adapted to translate the sleeve, the rotatable support and the baskets along the shaft. Between the sleeve and the rotatable support, a motor is operatively disposed adapted to make the rotatable support rotate around the shaft.

In a preferred embodiment, each carousel, before being rotated, is extracted from a respective row of the battery until it is brought into a manoeuvring space in order to not interfere with the other carousels during the rotation.

The carousels can be positioned very close to each other and the battery is very compact, even if it allows the safe rotation of the carousels (once extracted). Preferably, said action of rotating the carousels is carried out around a vertical axis.

Preferably, each carousel of a row of lower carousels is extracted by lifting it.

Preferably, each carousel of a row of upper carousels is extracted by lowering it.

The carousels are rotated after having moved them into the common manoeuvring space comprised between the row of upper carousels and the row of lower carousels. A same position in such manoeuvring space can receive, one at a time, a lower carousel or a corresponding upper carousel. The bulk of the battery is therefore further limited.

Preferably, annular anchoring structures are loaded in at least one of the baskets placed in the loading region simultaneously with picking-up of other annular anchoring structures from baskets disposed in the work region.

The picking up of the annular anchoring structures for the tyres being produced and the manual loading of the annular anchoring structures for the tyres of subsequent production occurs simultaneously. Loading and pick up can even affect the baskets of the same carousel.

Preferably, while the loaded baskets are brought from the loading region to the work region, empty baskets are brought from the work region to the loading region.

The two movements are simultaneous and allowed by the use of the carousels, each of which with only one rotation moving at least two baskets.

Preferably, the rotation comprises: reversing the positions of the baskets of the same carousel between the loading region and the work region.

Preferably, position reversal takes place through a 180° rotation of said carousel.

The movement and the structure necessary for obtaining such movement are very simple. Since the carousel carries two baskets that are extended in opposite directions, a rotation thereof by a flat angle allows the reversal of the position of such two baskets.

In a preferred embodiment, the annular anchoring structures of the baskets disposed in the work region are advanced along a radial direction of the carousel to bring them, one at a time, to a picking-up region of the respective basket.

In addition, preferably, the handling device picks up the annular anchoring structures by grasping them in a picking-up region of each basket that is unchangeable on varying the type of the annular anchoring structures.

It follows that the handling device picks up the annular anchoring structures at a defined and relatively limited number of pick-up zones (e.g. several dozen) placed on the ends of the baskets positioned in the work region.

Preferably, the handling device picks up the annular anchoring structures both from the baskets of the carousels placed in the respective row and from the baskets of the carousels placed in the manoeuvring space.

Preferably, before loading the baskets placed in the loading region, said baskets are partly extracted from the respective carousel along a radial direction.

The operator can in this manner load the annular anchoring structures on a basket without being obstructed by the adjacent baskets.

Preferably each annular anchoring structure present in said at least one first basket of the first series is picked up while said at least one second basket of the second series is being fully loaded with other annular anchoring structures.

Preferably, said at least one first basket and said at least one second basket are adjacent.

This allows using devices that are structurally simple, like the carousels, in order to carry out the exchange.

Preferably, a first series of upper baskets is disposed over a first series of lower baskets and a second series of upper baskets is disposed over a second series of lower baskets.

Preferably, the exchange takes place between upper baskets or between lower baskets.

Further characteristics and advantages will be clearer from the detailed description of a preferred but non-exclusive embodiment of a method and an apparatus for management control of annular anchoring structures in a process for building tyres for vehicle wheels, in accordance with the present invention.

Such description will be set forth hereinbelow with reference to the set of drawings, supplied only for exemplifying purposes and hence non-limiting, in which:
- figure 1 schematically shows in top view a plant for building tyres in accordance with the present invention;
- figure 2 shows in detail a portion of the plant of figure 1;
- figure 3 shows a front elevation view of the portion of figure 2;
- figure 4 is a side elevation view of the portion of figure 2;
- figure 5 is an enlargement of an element of figure 4;
- figure 6 schematically shows, in diameter section, a tyre for vehicle wheels obtained with the plant of figure 1.

With reference to the abovementioned figures, indicated with 1 in its entirety is a plant for building tyres 2 in accordance with the present invention.

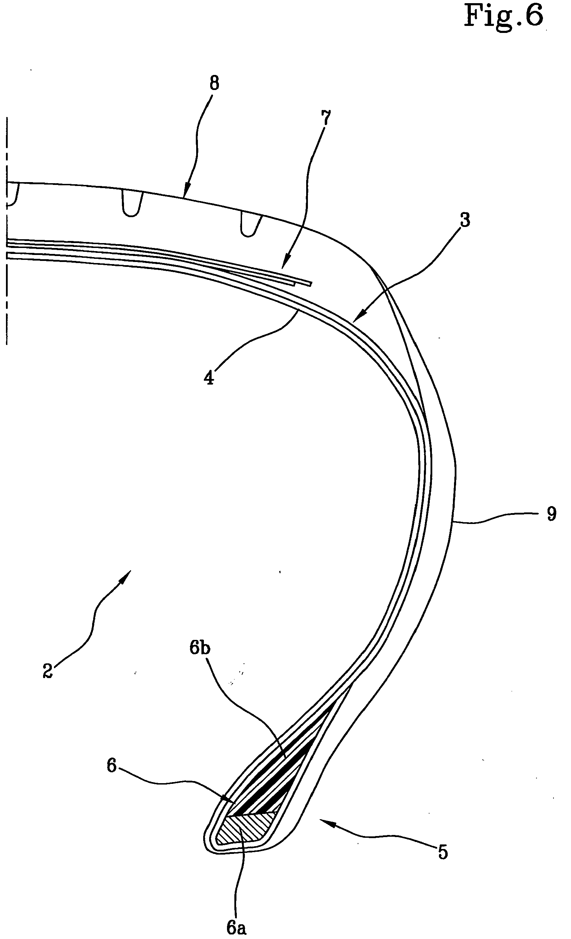

The plant 1 is set for manufacturing tyres 2 (figure 6) essentially comprising at least one carcass ply 3 preferably internally coated with a layer of impermeable elastomeric material or so-called liner 4, two so-called "beads" 5 integrating respective annular anchoring structures 6 comprising respective bead cores 6a possibly associated with elastomeric fillers 6b and engaged with the circumferential edges of the carcass ply 3, a belt structure 7 applied in radially outer position to the carcass ply 3, a tread band 8 applied in radially outer position to the belt structure 7, in a so-called crown zone of the tyre 2, and two sidewalls 9 applied in laterally opposite positions on the carcass ply 3, each at a lateral zone of the tyre 2, being extended from the corresponding bead 5 to the corresponding lateral edge of the tread band 8.

The plant 1 comprises preferably a line 10 for building carcass structures, in which one carcass structure, comprising at least one of the carcass plies 3 and the annular anchoring structures 6, is formed on a building drum 11. The line 10 for building carcass structures comprises a building device 12 for carcass sleeves on the building drums 11. The building device 12 comprises a plurality of stations 13. For example, a first station 13 makes the liner 5; in at least one second station 13 of the building device 12, the manufacturing of one or more carcass plies 3 can be actuated. The line 10 for building carcass structures also comprises a station 14 dedicated for the integration of the annular anchoring structures 6 in said at least one carcass ply 3, through the application of the same annular anchoring structures 6 in axially outer position with respect to the flaps of said at least one carcass ply 3 that are set downward in the direction of the rotation axis of said building drum 11, flaps which are subsequently turned up around the annular anchoring structures 6. Downstream of the station 14 for the integration of the annular anchoring structures 6, further processing stations 13 can be present, e.g. for the manufacturing of at least one portion of an anti-abrasive element or the sidewalls 9.

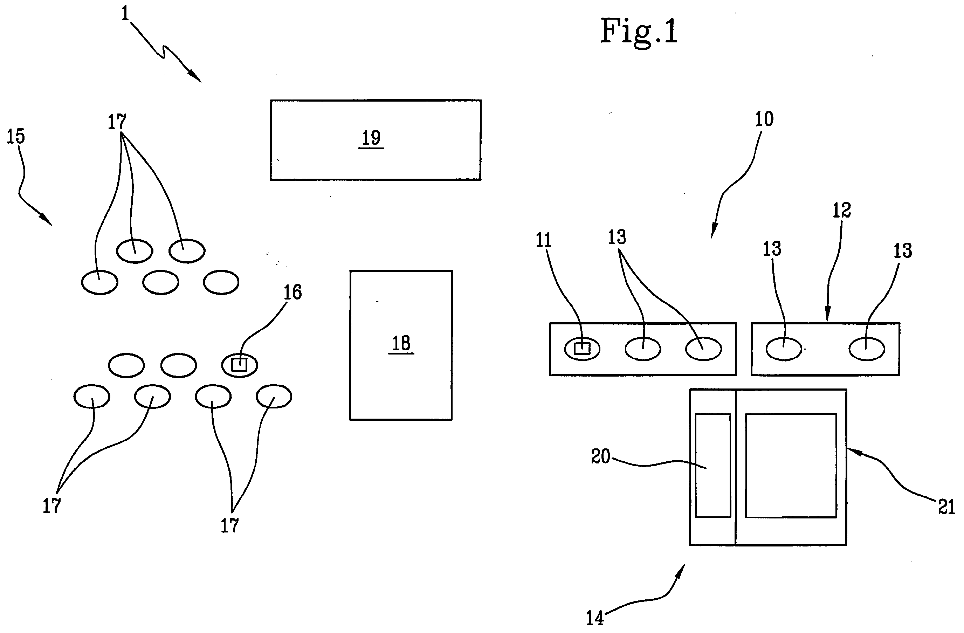

The plant 1 also comprises a line 15 for building crown structures, in which a crown structure, comprising at least the belt structure 7 and preferably also the tread band 8, is formed on a forming drum 16. In figure 1, a plurality of work stations 17 are indicated belonging to the aforesaid line 15 for building crown structures, each station dedicated to forming at least one portion of a component of the tyre 2 on the forming drum 16. The forming drum 16 is sequentially transferred from one station to the next station through suitable devices, not illustrated. At least one work station 17 can be dedicated to the manufacturing of the belt structure 7.

By way of an example, a work station 17 is preferably arranged for the manufacturing of the tread band 8 and/or the sidewalls 9. The plant 1 is also provided with an assembly and conformation station 18 operatively associated with the line 10 for building carcass structures and with the line 15 for building crown structures. In the assembly and conformation station 18, the carcass structure is shaped as a toroid and is associated with the crown structure, in a manner so as to obtain a green tyre. The green tyres built by the plant are sequentially transferred to a curing line 19, from which the moulded and cured tyres 2 are obtained.

The processing station 14 dedicated for the integration of the annular anchoring structures 6 comprises a bead formation machine 20, for example of the type described in WO 2010/064066 on behalf of the same Applicant. An apparatus 21 feeds the annular anchoring structures 6 to the bead formation machine 20.

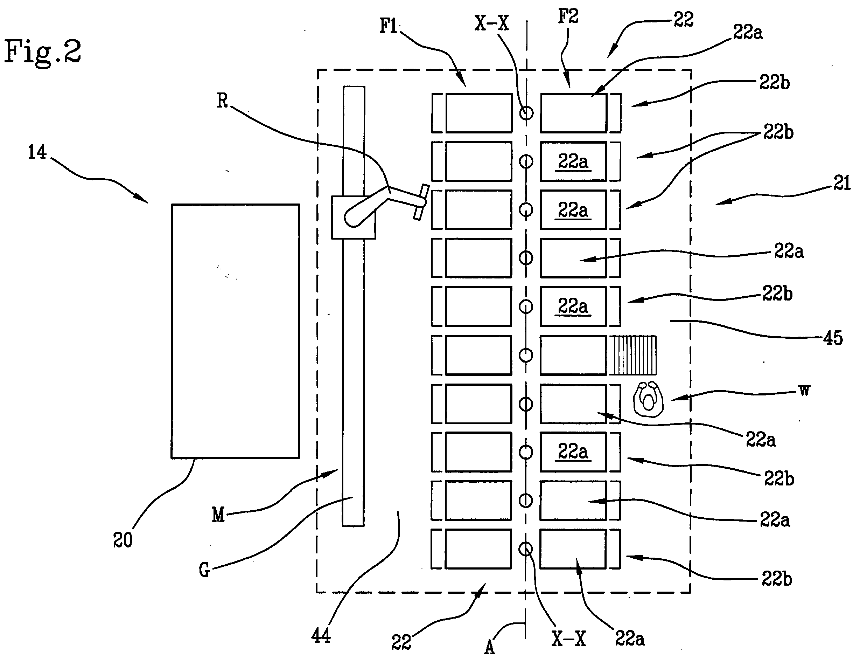

As is clearer in figure 2, the apparatus 21 comprises a battery 22 of carousels 22a, 22b placed next to each other and a handling device "M" defined by an anthropomorphic arm "R" movable along a guide "G". The handling device "M" is situated between the battery 22 of carousels 22a, 22b and the bead formation machine 20 in a manner so to be able to pick up the annular anchoring structures 6 contained in the carousels 22a, 22b and bring them into the bead formation machine 20. In the illustrated embodiment, the guide "G" is rectilinear and runs parallel to the battery 22 of carousels 22a, 22b.

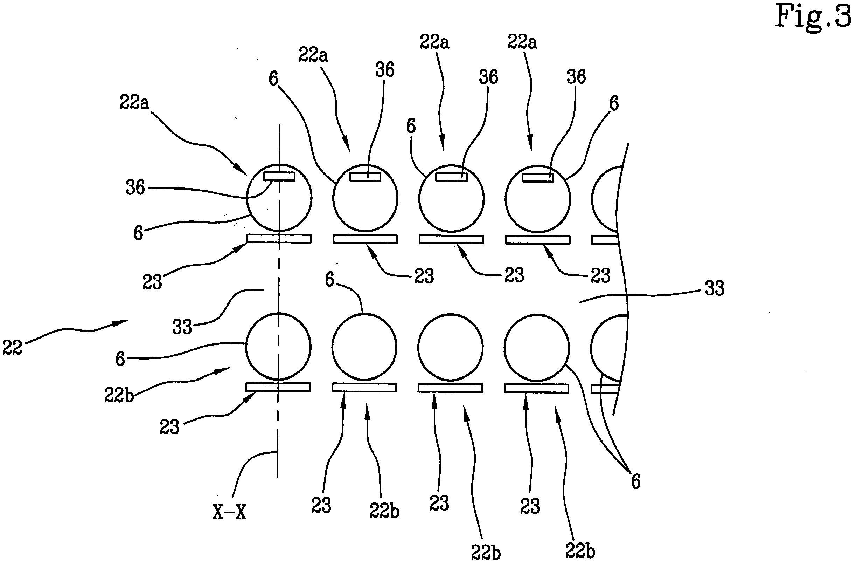

As is clearer in figure 3, the battery 22 of carousels 22 consists of two rows of carousels 22a, 22b. The carousels 22a, 22b of each row are aligned and disposed close to each other, one after the other along a straight line "A". The two rows are placed on top of each other in a manner such that each upper carousel 22a is vertically superimposed on a respective lower carousel 22b along a vertical rotation axis "X-X". In a preferred embodiment, each of the two rows comprises ten carousels.

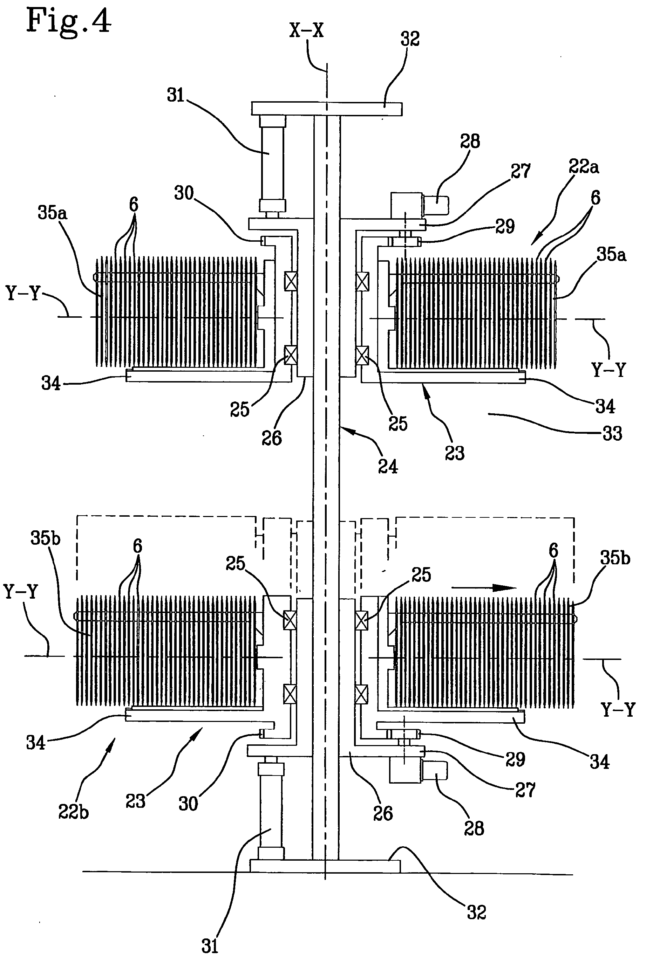

Each carousel 22a, 22b comprises (figure 4) a rotatable support 23 susceptible of rotation around a vertical shaft 24 coaxial with the rotation axis "X-X". The rotatable support 23 is rotatably mounted through bearings 25 on a sleeve 26 which can slide along the vertical shaft 24 but not rotate. The sleeve 26 is for example inserted on the vertical shaft 24 through a grooved coupling that prevents the rotation thereof.

Each vertical shaft 24 carries a lower carousel 22b and an upper carousel 22a.

Each sleeve 26 has an appendage 27 which is extended radially away from the vertical shaft 24 and carries a gear reducer 28 with a respective pinion 29. The pinion 29 is engaged with a crown 30 integral with the rotatable support 23 and coaxial with the vertical shaft 24. A linear actuator 31, for example a hydraulic piston, connects each sleeve 26 to a frame 32 that is fixed with respect to the ground and relative to the vertical shaft 24. The linear actuator 31 moves the respective carousel 22a, 22b along the respective vertical shaft 24 and the gear reducer 28 causes the rotation thereof around said vertical shaft 24.

Each linear actuator 31 of each lower carousel 22b has one end connected to the sleeve 26 and an opposite end constrained to the ground. Due to the linear actuator 31, each lower carousel 22b is movable along the vertical shaft 24 between a first lowered position, in which the linear actuator 31 is in a retracted position thereof, and a second raised position, in which the linear actuator 31 is in an extracted configuration thereof.

Each linear actuator 31 of each upper carousel 22a has one end connected to the sleeve 26 and one opposite end constrained close to an upper portion of the vertical shaft 24. Due to the linear actuator 31, each upper carousel 22a is movable along the vertical shaft 24 between a first raised position, in which the linear actuator 31 is in a retracted configuration thereof, and a second lowered position, in which the linear actuator 31 is in an extracted configuration thereof.

When the carousels 22a, 22b of each single vertical shaft 24 are in the respective first positions, they define together a manoeuvring space 33 which has a height such to be able to receive one of the two carousels 22a, 22b without interference. In other words, the two rows of carousels 22a, 22b define between them an empty central space in which the carousel 22a, 22b brought therein can rotate without interference with the adjacent carousels 22a, 22b.

The rotatable support 23 has two radial portions 34 which are extended radially away from the vertical shaft 24 along opposite directions. Each of said radial portions 34 carries a basket 35a, 35b for the annular anchoring structures 6.

Therefore, it results that the baskets 35a, 35b are organized:
- in a first series "F1" of upper baskets 35a (belonging to the row of upper carousels 22a) and in a first series "F1" of lower baskets 35b (belonging to the row of lower carousels 22b) facing the handling device "M" and at the processing station 14 with the bead formation machine 20;
- in a second series "F2" of upper baskets 35a (belonging to the row of upper carousels 22a) and in a second series "F2" of lower baskets 35b (belonging to the row of lower carousels 22b) facing away from the handling device "M".

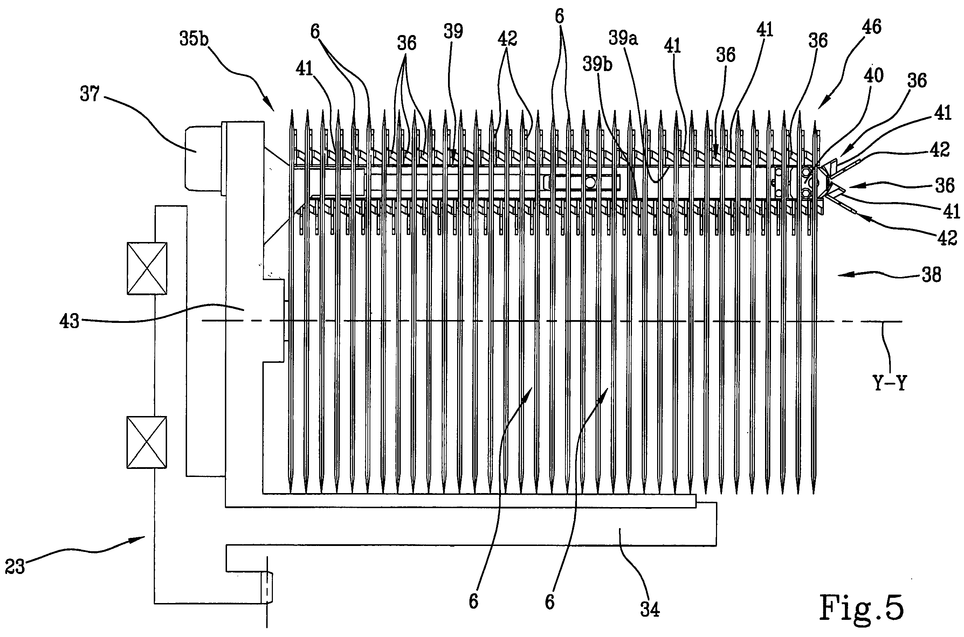

Each basket 35a, 35b comprises support elements 36 (figure 5) adapted to support the annular anchoring structures 6 disposed next to each other at close distance and coaxial with a common main axis "Y-Y" which is radially extended from the vertical shaft 24, like the respective radial portion 34.

A motor 37 is capable of moving the support elements 36 and the annular anchoring structures 6 carried thereby along a direction parallel to the common main axis "Y-Y", in a manner so as to successively bring each of the annular anchoring structures 6 to a final end 38 of the respective basket 35a, 35b placed close to a radially peripheral zone of the carousel 22a, 22b.

The support elements 36 are mounted next to each other on a belt 39 (or a chain) wound on a pulley 40 (of which only one is visible in figure 5) moved by the motor 37.

The belt 39 comprises an upper branch 39a and a lower branch 39b parallel to the common main axis "Y-Y" and being extended for the entire length of the basket 35.

When the support elements 36 are found on the upper branch 39a, they receive the annular anchoring structures 6 in seats 41 thereof. The belt 39, the pulleys 40 and the motor 37 constitute devices for moving the annular anchoring structures 6 along the common main axis "Y-Y".

Each annular anchoring structure 6 rests in the respective seat 41 at a radially inner portion thereof and therefore results hung to the support element 36.

Each support element 36 has abutment elements 42 which, together with the seats 41, maintain the annular anchoring structures 6 at a predefined distance from each other along the common main axis "Y-Y".

The movement devices 37, 39, 40 and the support elements 36 are mounted on a frame 43 in turn mounted on the radial portion 34 through a guide which allows the translation thereof along a radial direction parallel to the common main axis "Y-Y". In this manner, the basket 35a, 35b (comprising the frame 43, the movement devices 37, 39, 40 and the support elements 36) can be partly extracted from the rotatable support 23 of the respective carousel 22a, 22b.

As can be observed from figures 2 and 4, the baskets 35a and the radial portions 34 of the upper carousels 22a have a radial extension (parallel to the common main axis "Y-Y") lower than the radial extension of the baskets 35b and the radial portions 34 of the lower carousels 22b.

In accordance with the process and the method according to the invention and with reference to figure 1, the baskets 35a, 35b facing the handling device 23 (i.e. belonging to the first series "F1") are found in a work region 44 while the baskets 35a, 35b facing away (i.e. belonging to the second series "F2") are positioned in a loading region 45 which an operator "W" can access.

The anthropomorphic arm "R" is capable of picking up each annular anchoring structure 6 which is found on the final end 38 of each basket 35a, 35b situated in the work region 44 (i.e. of the first series "F1"), whether the carousel 22a, 22b is found in the first position thereof or in the second position thereof (i.e. in the manoeuvring space 33).

The anthropomorphic arm "R" is positioned, in order to grasp the annular anchoring structure 6, close to a single picking-up region 46 of the basket 35a, 35b unchangeable on varying the features (size and constituent elements) of the annular anchoring structures 6. As is visible in figure 5, such single picking-up region 46 is situated close to the support element 36 which supports the radially outer annular anchoring structure 6 of the basket 35a, 35b, i.e. that which is found on the final end 38. The anthropomorphic arm "R" grasps such annular anchoring structure 6 close to a portion thereof placed just above the support element 36, by which it is supported. Each time that an annular anchoring structure 6 is picked up from a basket 35a, 35b, the motor 37 moves the support elements 36 one pitch (corresponding with the bulk of a support element 36) towards the final end 38 in order to bring a successive annular anchoring structure 6 to the picking-up region 46.

At each pair of superimposed carousels 22a, 22b (mounted on a same vertical shaft 24), the anthropomorphic arm "R" comes to take the annular anchoring structures 6 at four pick-up points placed a three different pick-up elevations: a first point corresponding with the picking-up region 46 of the basket 35a of the upper carousel 22a placed in the first raised position thereof; a second point corresponding with the picking-up region 46 of the basket 35a of the upper carousel 22a placed in the second lowered position thereof; a third point corresponding with the picking-up region 46 of the basket 35b of the lower carousel 22b placed in the first lowered position thereof; a fourth point corresponding with the picking-up region 46 of the basket 35b of the lower carousel 22b placed at the second raised position thereof. Since the baskets 35a and the radial portions 34 of the upper carousels 22a have a radial extension lower than the radial extension of the baskets 35b and the radial portions 34 of the lower carousels 22b, the second point does not coincide with the fourth point even if it is placed at the same elevation.

While the handling device "M" picks up the annular anchoring structures 6 and carries them to the bead formation machine 20, the empty baskets 35a, 35b situated in the loading region 45 can be filled, for example by an operator "W", with other annular anchoring structures 6. In order to execute the loading, the frame 43 is made to slide on the rotatable support 23 and is extracted from the battery 22 in a manner so as to be able to easily access the basket 35a, 35b. The annular anchoring structures 6 are then loaded on the frame part 43 which carries the belt 39 and the support elements 36, until they are each arranged in a respective seat 41. Preferably, during loading, the carousel 22a, 22b to which the basket 35a, 35b belongs is positioned in the second position thereof, i.e. in the manoeuvring space 33, in which it is found at an ergonomic height for the operator "W", that is easy for executing the manual loading. In such ergonomic position, the basket 35a, 35b is positioned at an average height (average between the highest point and the lowest point of the basket) comprised between about 100 cm and 150 cm. Once the loading has terminated, the operator "W" once again inserts basket 35a, 35b between the lines of the battery 22.

When a basket 35a, 35b situated in the work region 44 remains empty, the carousel 22a, 22b to which it belongs is first brought to the manoeuvring space 33 (by lifting it or lowering it), then rotated 180° in a manner so as to reverse the position of the baskets 35a, 35b thereof and bring the previously loaded basket 35a, 35b from the loading region 45 to the work region 44, and finally brought back between the lines of the row thereof (by lifting it or lowering it). The empty basket 35a, 35b is found in the loading region 45 and can therefore be loaded once again. Each 180° rotation moves a basket 35a, 35b of the first series "F1" to the second series "F2" and vice versa.

Preferably, the apparatus 21 comprises a control unit that manages the movements of the carousels 22a, 22b on the basis of a control logic and in coordination with the rest of the plant 1. For example, in the case two baskets 35a, 35b disposed in the work region 44 remain empty simultaneously, the control unit provides to select, carry into the manoeuvring space 33 and rotate the carousel 22a, 22b whose adjacent carousels 22a, 22b have lower probability of running out of the annular anchoring structures 6 of the respective baskets 35a, 35b disposed in the work region 44.

## Claims

1. An apparatus for management control of annular anchoring structures (6) in a processing station (14) for building tyres for vehicle wheels, comprising:
a battery (22) of carousels (22a, 22b) disposed close to each other, each of said carousels (22a, 22b) carrying at least two baskets (35a, 35b), each adapted to receive a plurality of annular anchoring structures (6);
a handling device (M) to pick up the annular anchoring structures (6) from the baskets (35a, 35b) and release said annular anchoring structures (6) to the processing station (14);
wherein, through rotation of the respective carousel (22a, 22b), each basket (35a, 35b) is movable between a work region (44) placed in front of the handling device (M), and a loading region (45) facing away from the handling device (M).

2. An apparatus as claimed in claim 1, wherein each carousel (22a, 22b) is movable between a first position at which it is disposed between two adjacent carousels (22a, 22b) and a second position at which it is extracted from the battery (22) and can rotate without interfering with the other carousels (22a, 22b).

3. An apparatus as claimed in claim 1, wherein the battery (22) comprises two rows of carousels (22a, 22b); a manoeuvring space (33) being defined between said two rows, such space adapted to receive each carousel (22a, 22b), and wherein the carousels (22a, 22b) of the two rows are combined in pairs.

4. An apparatus as claimed in claim 1, wherein each carousel (22a, 22b) comprises a rotatable support (23) susceptible of rotation around a vertical shaft (24) and wherein the rotatable support (23) can translate along the vertical shaft (24).

5. An apparatus as claimed in claim 1, wherein the annular anchoring structures (6) of each basket (35a, 35b) are disposed in a mutual side-by-side relationship and coaxial with a common main axis (Y-Y).

6. An apparatus as claimed in claim 5, wherein each basket (35a, 35b) has a single region (46) for picking-up the annular anchoring structures (6) and wherein said single picking-up region (46) is placed at a final end (38) of the respective basket (35a, 35b).

7. An apparatus as claimed in claim 5, wherein each carousel (22a,22b) comprises a rotatable support (23) susceptible of rotation around a vertical shaft (24); wherein the rotatable support (23) carries two baskets (35a, 35b) placed at diametrically opposite positions relative to the vertical shaft (24); wherein the main axes (Y-Y) of the baskets (35a, 35b) extend from the vertical shaft (24) along radial directions.

8. An apparatus as claimed in claim 7, wherein each vertical shaft (24) carries a lower carousel (22b) and an upper carousel (22a) and wherein the baskets (35b) of the lower carousel (22b) have a radial extension greater than the radial extension of the baskets (35a) of the upper carousel (22a).

9. A process for building tyres for vehicle wheels comprising:
arranging a battery (22) of carousels (22a, 22b) close to each other, each of said carousels (22a, 22b) carrying at least two baskets (35a, 35b) adapted to receive a plurality of annular anchoring structures (6);
arranging at least one building drum (11) associated with a processing station (14), such drum provided for receiving pairs of annular anchoring structures (6) during processing of a tyre being formed;
wherein feeding of the annular anchoring structures (6) to said processing station (14) comprises:
loading the annular anchoring structures (6) into the baskets (35a, 35b) disposed in a loading region (45) facing away from the processing station (14);
rotating the carousels (22a, 22b) carrying the loaded baskets (35a, 35b) until arranging them in a work region (44) facing the processing station (14);
picking up, by a handling device (M), the annular anchoring structures (6) from the baskets (35a, 35b) disposed in the work region (44) and releasing said annular anchoring structures (6) at the processing station (14).

10. A process as claimed in claim 9, wherein each carousel (22a, 22b), before being rotated, is extracted from a respective row of the battery (22) and is brought to a manoeuvring space.

11. A process as claimed in claim 9, wherein said action of rotating the carousels (22a, 22b) is carried out around a vertical axis (X-X).

12. A process as claimed in claim 9, wherein annular anchoring structures (6) are loaded in at least one of the baskets (35a, 35b) disposed in the loading region (45) simultaneously with picking-up of other annular anchoring structures (6) from baskets (35a, 35b) disposed in the work region (44).

13. A method for management control of annular anchoring structures in a process for building tyres for vehicle wheels, comprising:
i) arranging at least one first series (F1) of baskets (35a, 35b) in front of a processing station (14) provided for receiving annular anchoring structures (6) during processing of a tyre being formed;
ii) arranging at least one second series (F2) of baskets (35a, 35b) placed at the rear of the first series of baskets (35a, 35b) relative to the processing station (14);
iii) picking up at least one annular anchoring structure (6) from at least one first basket (35a, 35b) of the first series (F1) and transferring it to the processing station (14) while at least one second basket (35a, 35b) of the second series (F2) is loaded with at least one annular anchoring structure (6);
iv) simultaneously exchanging the position of said at least one first basket (35a, 35b) with that of said at least one second basket (35a, 35b);
v) repeating actions iii) and iv).

14. A method as claimed in claim 13, wherein each annular anchoring structure (6) present in said at least one first basket (35a, 35b) of the first series (F1) is picked up while said at least one second basket (35a, 35b) of the second series (F2) is being fully loaded with other annular anchoring structures (6).

15. A method as claimed in claim 13, comprising: bringing one annular anchoring structure (6) at a time close to a picking-up region (46) of the at least one first basket (35a, 35b) of the first series (F1).

## Patentansprüche

1. Vorrichtung zur Steuerung der Verwaltung von ringförmigen Verankerungsstrukturen (6) in einer Verarbeitungsstation (14) zur Herstellung von Reifen für Fahrzeugräder, wobei die Vorrichtung umfasst:
eine Batterie (22) von Karussellen (22a, 22b), die nahe beieinander angeordnet sind, wobei jedes der Karusselle (22a, 22b) zumindest zwei Körbe (35a, 35b) trägt, die jeweils dazu geeignet sind, eine Vielzahl von ringförmigen Verankerungsstrukturen (6) aufzunehmen;
eine Manipulationsvorrichtung (M) zum Aufnehmen der ringförmigen Verankerungsstrukturen (6) von den Körben (35a, 35b) und Freigeben der ringförmigen Verankerungsstrukturen (6) an die Verarbeitungsstation (14);
wobei durch Drehung des jeweiligen Karussells (22a, 22b) jeder Korb (35a, 35b) zwischen einem Arbeitsbereich (44), der vor der Manipulationsvorrichtung (M) angeordnet ist, und einem Ladebereich (45), der von der Manipulationsvorrichtung (M) weg weist, beweglich ist.

2. Vorrichtung nach Anspruch 1, wobei jedes Karussell (22a, 22b) zwischen einer ersten Position, in der es zwischen zwei benachbarten Karussellen (22a, 22b) angeordnet ist, und einer zweiten Stellung, in der es aus der Batterie (22) herausgenommen ist und sich ohne Interferenz mit den anderen Karussellen (22a, 22b) drehen kann, beweglich ist.

3. Vorrichtung nach Anspruch 1, wobei die Batterie (22) zwei Reihen von Karussellen (22a, 22b) umfasst; wobei ein Manövrierraum (33) zwischen den beiden Reihen definiert und dazu geeignet ist, jedes Karussell (22a, 22b) aufzunehmen, und wobei die Karusselle (22a, 22b) der beiden Reihen zu Paaren kombiniert werden.

4. Vorrichtung nach Anspruch 1, wobei jedes Karussell (22a, 22b) einen drehbaren Träger (23) umfasst, der zur Drehung um eine vertikale Welle (24) geeignet ist, und wobei der drehbare Träger (23) sich entlang der vertikalen Welle (24) verschieben kann.

5. Vorrichtung nach Anspruch 1, wobei die ringförmigen Verankerungsstrukturen (6) jedes Korbs (35a, 35b) in einer seitlichen Beziehung zueinander und koaxial mit einer gemeinsamen Hauptachse (Y-Y) angeordnet sind.

6. Vorrichtung nach Anspruch 5, wobei jeder Korb (35a, 35b) einen einzelnen Bereich (46) zum Aufnehmen der ringförmigen Verankerungsstrukturen (6) aufweist, und wobei der einzelne Aufnahmebereich (46) an einem Ende (38) des jeweiligen Korbs (35a, 35b) angeordnet ist.

7. Vorrichtung nach Anspruch 5, wobei jedes Karussell (22a, 22b) einen drehbaren Träger (23) umfasst, der zur Drehung um eine vertikale Welle (24) geeignet ist; wobei der drehbare Träger (23) zwei Körbe (35a, 35b) trägt, die an diametral entgegengesetzten Positionen relativ zu der vertikalen Welle (24) angeordnet sind; wobei die Hauptachsen (Y-Y) der Körbe (35a, 35b) sich von der vertikalen Welle (24) entlang radialer Richtungen erstrecken.

8. Vorrichtung nach Anspruch 7, wobei jede vertikale Welle (24) ein unteres Karussell (22b) und ein oberes Karussell (22a) trägt, und wobei die Körbe (35b) des unteren Karussells (22b) eine radiale Erstreckung aufweisen, die größer ist als die radiale Erstreckung der Körbe (35a) des oberen Karussells (22a).

9. Verfahren zur Herstellung von Reifen für Fahrzeugräder, umfassend:
Anordnen einer Batterie (22) von Karussellen (22a, 22b), die nahe beieinander angeordnet sind, wobei jedes der Karusselle (22a, 22b) zumindest zwei Körbe (35a, 35b) trägt, die dazu geeignet sind, eine Vielzahl von ringförmigen Verankerungsstrukturen (6) aufzunehmen;
Anordnen zumindest einer Fertigungstrommel (11), die einer Verarbeitungsstation (14) zugeordnet ist, wobei die Trommel dazu vorgesehen ist, Paare von ringförmigen Verankerungsstrukturen (6) während der Verarbeitung eines in Herstellung befindlichen Reifens aufzunehmen;
wobei das Zuführen der ringförmigen Verankerungsstrukturen (6) zu der Verarbeitungsstation (14) die folgenden Schritte umfasst:
Laden der ringförmigen Verankerungsstrukturen (6) in die Körbe (35a, 35b), die in einem Ladebereich (45) angeordnet sind, die von der Verarbeitungsstation (14) weg weisen;
Drehen der Karusselle (22a, 22b), die die beladenen Körbe (35a, 35b) tragen, bis sie in einem Arbeitsbereich (44) angeordnet sind, der zu der Verarbeitungsstation (14) weist;
Aufnehmen der ringförmigen Verankerungsstrukturen (6) aus den Körben (35a, 35b), die in dem Arbeitsbereich (44) angeordnet sind, durch eine Manipulationsvorrichtung (M), und Freigeben der ringförmigen Verankerungsstrukturen (6) an der Verarbeitungsstation (14).

10. Verfahren nach Anspruch 9, wobei jedes Karussell (22a, 22b), bevor es gedreht wird, aus einer jeweiligen Reihe der Batterie (22) herausgenommen und in einen Manövrierraum gebracht wird.

11. Verfahren nach Anspruch 9, wobei jeder Vorgang der Drehung der Karusselle (22a, 22b) um eine vertikale Achse (X-X) ausgeführt wird.

12. Verfahren nach Anspruch 9, wobei ringförmige Verankerungsstrukturen (6) in zumindest einen der Körbe (35a, 35b), die in dem Ladebereich (45) angeordnet sind, geladen werden, zeitgleich mit der Aufnahme anderer ringförmiger Verankerungsstrukturen (6) aus Körben (35a, 35b), die in dem Arbeitsbereich (44) angeordnet sind.

13. Verfahren zur Steuerung der Verwaltung von ringförmigen Verankerungsstrukturen in einem Verfahren zur Herstellung von Reifen für Fahrzeugräder, wobei das Verfahren die folgenden Schritte umfasst:
i) Anordnen zumindest einer ersten Folge (F1) von Körben (35a, 35b) vor einer Verarbeitungsstation (14), die zur Aufnahme von ringförmigen Verankerungsstrukturen (6) während der Bearbeitung eines in Herstellung befindlichen Reifens vorgesehen sind;
ii) Anordnen zumindest einer zweiten Folge (F2) von Körben (35a, 35b), die hinter der ersten Folge von Körben (35a, 35b) relativ zu der Verarbeitungsstation (14) angeordnet ist;
iii) Aufnehmen zumindest einer ringförmigen Verankerungsstruktur (6) von zumindest einem ersten Korb (35a, 35b) der ersten Folge (F1) und Übertragen an die Verarbeitungsstation (14), während zumindest ein zweiter Korb (35a, 35b) der zweiten Folge (F2) mit zumindest einer ringförmigen Verankerungsstruktur (6) beladen wird;
iv) zeitgleiches Austauschen der Position des zumindest einen ersten Korbs (35a, 35b) mit jener des zumindest einen zweiten Korbs (35a, 35b);
v) Wiederholen der Vorgänge iii) und iv).

14. Verfahren nach Anspruch 13, wobei jede ringförmige Verankerungsstruktur (6), die in dem zumindest einen ersten Korb (35a, 35b) der ersten Folge (F1) vorhanden ist, aufgenommen wird, während der zumindest eine zweite Korb (35a, 35b) der zweiten Folge (F2) vollständig mit anderen ringförmigen Verankerungsstrukturen (6) beladen wird.

15. Verfahren nach Anspruch 13, das folgenden Schritt umfasst:
Bringen jeweils nur einer ringförmigen Verankerungsstruktur (6) nahe an einen Aufnahmebereich (46) des zumindest einen ersten Korbs (35a, 35b) der ersten Folge (F1).

## Revendications

1. Appareil pour le contrôle de gestion de structures d'ancrage annulaires (6) dans une station de traitement (14) pour la construction de pneus pour roues de véhicule, comprenant :
une batterie (22) de carrousels (22a, 22b) disposés les uns à proximité des autres, chacun desdits carrousels (22a, 22b) portant au moins deux paniers (35a, 35b), chacun adapté pour recevoir une pluralité de structures d'ancrage annulaires (6) ;
un dispositif de manipulation (M) pour prélever les structures d'ancrage annulaires (6) à partir des paniers (35a, 35b) et libérer lesdites structures d'ancrage annulaires (6) à la station de traitement (14) ;
dans lequel, par rotation du carrousel respectif (22a, 22b), chaque panier (35a, 35b) est mobile entre une région de travail (44) placée en face du dispositif de manipulation (M), et une région de chargement (45) éloignée du dispositif de manipulation (M).

2. Appareil tel que revendiqué dans la revendication 1, dans lequel chaque carrousel (22a, 22b) est mobile entre une première position à laquelle il est disposé entre deux carrousels adjacents (22a, 22b) et une deuxième position à laquelle il est extrait de la batterie (22) et peut tourner sans interférer avec les autres carrousels (22a, 22b).

3. Appareil tel que revendiqué dans la revendication 1, dans lequel la batterie (22) comprend deux rangées de carrousels (22a, 22b) ; une marge de manoeuvre (33) étant définie entre lesdites deux rangées, une telle marge étant adaptée pour recevoir chaque carrousel (22a, 22b), et où les carrousels (22a, 22b) des deux rangées sont combinés par paires.

4. Appareil tel que revendiqué dans la revendication 1, dans lequel chaque carrousel (22a, 22b) comprend un support rotatif (23) susceptible de tourner autour d'un arbre vertical (24) et dans lequel le support rotatif (23) peut effectuer un mouvement de translation le long de l'arbre vertical (24).

5. Appareil tel que revendiqué dans la revendication 1, dans lequel les structures d'ancrage annulaires (6) de chaque panier (35a, 35b) sont disposées de façon réciproque côte à côte et coaxiales à un axe principal commun (Y-Y).

6. Appareil tel que revendiqué dans la revendication 5, dans lequel chaque panier (35a, 35b) a une seule région (46) pour prélever les structures d'ancrage annulaires (6) et dans lequel ladite seule région de prélèvement (46) est placée au niveau d'une extrémité finale (38) du panier respectif (35a, 35b).

7. Appareil tel que revendiqué dans la revendication 5, dans lequel chaque carrousel (22a, 22b) comprend un support rotatif (23) susceptible de tourner autour d'un arbre vertical (24) ; dans lequel le support rotatif (23) porte deux paniers (35a, 35b) placés à des positions diamétralement opposées par rapport à l'arbre vertical (24) ; dans lequel les axes principaux (Y-Y) des paniers (35a, 35b) s'étendent à partir de l'arbre vertical (24) le long de directions radiales.

8. Appareil tel que revendiqué dans la revendication 7, dans lequel chaque arbre vertical (24) porte un carrousel inférieur (22b) et un carrousel supérieur (22a) et dans lequel les paniers (35b) du carrousel inférieur (22b) ont une extension radiale supérieure à l'extension radiale des paniers (35a) du carrousel supérieur (22a).

9. Processus de construction de pneus pour roues de véhicule comprenant le fait :
d'agencer une batterie (22) de carrousels (22a, 22b) les uns à proximité des autres, chacun desdits carrousels (22a, 22b) portant au moins deux paniers (35a, 35b) adaptés pour recevoir une pluralité de structures d'ancrage annulaires (6) ;
d'agencer au moins un tambour de construction (11) associé à une station de traitement (14), de tel tambour étant prévu pour recevoir des paires de structures d'ancrage annulaires (6) pendant le traitement d'un pneu qui est formé ;
dans lequel l'acheminement des structures d'ancrage annulaires (6) à ladite station de traitement (14) comprend le fait :
de charger les structures d'ancrage annulaires (6) dans les paniers (35a, 35b) disposés dans une région de chargement (45) éloignée de la station de traitement (14) ;
de mettre en rotation les carrousels (22a, 22b) portant les paniers chargés (35a, 35b) jusqu'à ce qu'ils soient agencés dans une région de travail (44) faisant face à la station de traitement (14) ;
de prélever, par un dispositif de manipulation (M), les structures d'ancrage annulaires (6) à partir des paniers (35a, 35b) disposés dans la région de travail (44) et de libérer lesdites structures d'ancrage annulaires (6) au niveau de la station de traitement (14).

10. Processus tel que revendiqué dans la revendication 9, dans lequel chaque carrousel (22a, 22b), avant d'être mis en rotation, est extrait d'une rangée respective de la batterie (22) et est amené à une marge de manoeuvre.

11. Processus tel que revendiqué dans la revendication 9, dans lequel ladite action de mise en rotation des carrousels (22a, 22b) est réalisée autour d'un axe vertical (X-X).

12. Processus tel que revendiqué dans la revendication 9, dans lequel les structures d'ancrage annulaires (6) sont chargées dans au moins l'un des paniers (35a, 35b) disposés dans la région de chargement (45) simultanément avec le prélèvement d'autres structures d'ancrage annulaires (6) à partir des paniers (35a, 35b) disposés dans la région de travail (44).

13. Procédé pour le contrôle de gestion de structures d'ancrage annulaires dans un processus de construction de pneus pour roues de véhicule, comprenant le fait :
i) d'agencer au moins une première série (F1) de paniers (35a, 35b) en face d'une station de traitement (14) prévue pour recevoir des structures d'ancrage annulaires (6) pendant le traitement d'un pneu qui est formé ;
ii) d'agencer au moins une deuxième série (F2) de paniers (35a, 35b) placée à l'arrière de la première série de paniers (35a, 35b) par rapport à la station de traitement (14) ;
iii) de prélever au moins une structure d'ancrage annulaire (6) à partir d'au moins un premier panier (35a, 35b) de la première série (F1) et de la transférer à la station de traitement (14) pendant qu'au moins un deuxième panier (35a, 35b) de la deuxième série (F2) est chargé d'au moins une structure d'ancrage annulaire (6) ;
iv) d'échanger simultanément la position dudit au moins un premier panier (35a, 35b) avec celle dudit au moins un deuxième panier (35a, 35b) ;
v) de répéter les actions iii) et iv).

14. Procédé tel que revendiqué dans la revendication 13, dans lequel chaque structure d'ancrage annulaire (6) présente dans ledit au moins un premier panier (35a, 35b) de la première série (F1) est prélevée pendant que ledit au moins un deuxième panier (35a, 35b) de la deuxième série (F2) est entièrement chargé d'autres structures d'ancrage annulaires (6).

15. Procédé tel que revendiqué dans la revendication 13, comprenant le fait :
d'amener une structure d'ancrage annulaire (6) à chaque fois à proximité d'une région de prélèvement (46) de l'au moins un premier panier (35a, 35b) de la première série (F1).
